(19) Europäisches Patentamt
European Patent Office
Office européen des brevets

(11) Publication number : **0 392 810 B1**

(12) # EUROPEAN PATENT SPECIFICATION

(45) Date of publication of patent specification : **21.06.95 Bulletin 95/25**

(51) Int. Cl.$^6$ : **G11B 5/62,** G11B 5/708, G11B 5/716

(21) Application number : **90303871.9**

(22) Date of filing : **10.04.90**

(54) **Magnetic recording medium.**

(30) Priority : **11.04.89 JP 92658/89**

(43) Date of publication of application : **17.10.90 Bulletin 90/42**

(45) Publication of the grant of the patent : **21.06.95 Bulletin 95/25**

(84) Designated Contracting States : **DE FR GB**

(56) References cited :
**EP-A- 0 280 438**
**EP-A- 0 360 175**
**EP-A- 0 373 856**
**PATENT ABSTRACTS OF JAPAN, unexamined applications, E field, vol. 3, no. 17,February 14, 1979 THE PATENT OFFICE JAPANESE GOVERNMENT page 85 E 90**

(73) Proprietor : **KONICA CORPORATION**
**26-2, Nishishinjuku 1-chome,**
**Shinjuku-ku**
**Tokyo 160 (JP)**

(72) Inventor : **Kawahara, Setsuko**
**C/o Konica Corporation,**
**1 Sakura-machi**
**Hino-shi, Tokyo (JP)**
Inventor : **Nakano, Yasushi**
**C/o Konica Corporation,**
**1 Sakura-machi**
**Hino-shi, Tokyo (JP)**
Inventor : **Koyama, Noboru**
**C/o Konica Corporation,**
**1 Sakura-machi**
**Hino-shi, Tokyo (JP)**

(74) Representative : **Wood, Anthony Charles et al**
**Urquhart-Dykes & Lord**
**91 Wimpole Street**
**London W1M 8AH (GB)**



Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

### FIELD OF THE INVENTION

The present invention relates to a recording magnetic medium, specifically to improvement in the properties of a magnetic recording medium having a multiple-layer structure.

### BACK GROUND OF THE INVENTION

Magnetic recording media such as magnetic tapes, magnetic sheets and magnetic disks are widely used in the fields of audio equipment, video equipment and computers. Talking about magnetic tapes for the video equipment field, for instance, they are used in high speed running situations and they are normally made of a material with high electric resistance; therefore, the surface properties of the tape in contact with a guide pole etc. must be appropriate for tape running and must have an antistatic effect.

Also, to improve sensitivity, particularly output in a high frequency range, magnetic layer surface is finished smooth so that the state of sliding of the magnetic tape against the magnetic head does not change. When the magnetic layer surface becomes very smooth like this, however, the tape becomes liable to a problem in running due to great dynamic friction coefficient.

To solve these problems, the use of carbon black has been proposed. This aims at obtaining an antistatic effect based on the electroconductivity of carbon black, a shading effect, and a surface roughening effect (running resistance reduction) of grains thereof. However, since the average grain size of the carbon black used is 10 to 20 nm, its dispersion in paints is very poor. A magnetic layer formed using this dispersion is liable to peel out because aggregated grains cause surface ruggedness and their binding to binder is not sufficiently strong.

Carbon black with such a small grain size makes it difficult to obtain uniform smoothness with no significant ruggedness on the magnetic layer due to the poor dispersibility, which in turn easily leads to surface irregularity and excess roughness.

Also, attempts have been made to use in combination a carbon black with a relatively small average grain size of 10 to 60 nm and another carbon black with a greater average grain size of not less than 100 nm to adjust magnetic layer surface properties (e.g. Japanese Patent Examined Publication Nos. 9041/1979 and 20203/1978 and Japanese Patent Publication Open to Public Inspection No. 128039/1983). However, simple combined use of carbon blacks of different grain sizes does not ensure sufficient improvement in running property or running durability.

Meanwhile, in the case of single-layer structure, it is difficult to prepare a magnetic tape which is good in both running durability and electromagnetic conversion property. In light of this fact, a magnetic tape with a multiple layer structure comprising at least 2 magnetic layers was developed which is capable of overlay recording of both high and low frequency waves and which satisfies the requirements of running property, running durability and electromagnetic conversion properties. The examples of proposed methods include the method in which carbon black (hereinafter referred to as CB) is added to the upper magnetic layer while it is not added to the lower magnetic layer (e.g. Japanese Patent Publication Open to Public Inspection No. 200425/1983) and the method in which CB with an average grain size of not less than 80 nm is added to the upper layer while CB with an average grain size of not more than 40 nm is added to the lower layer (e.g. Japanese patent Publication Open to Public Inspection No. 300425/1988).

It can be thought, however, that no satisfactory durability is obtained simply by adding CB with a small grain size of at most 30 nm to the upper layer alone, though it is possible to increase the loading rate of magnetic grains in the magnetic layer for improved electromagnetic properties by adding CB to the upper layer alone for sufficient running durability while not adding CB to the lower layer.

It is necessary to increase the packing density of the magnetic powder in the lower layer in order to increase the output. The characteristics can be improved when the redundant addition agents are not contained in the lower layer. In other words, it is preferable that $\alpha$-$A\ell_2O_3$, carbon black and the like are not contained in the lower layer.

In addition, when CB with a greater grain size is added to the upper layer while CB with a smaller grains size is added to the lower layer, D/O increases due to attached substances because the lower layer is liable to catch dust during the drying and rolling processes when using the method in which the upper layer is coated by the wet-on-dry multiple coating method after the lower layer is coated, dried and rolled, though running durability can be improved without degrading the electromagnetic properties.

Also, in the case of the wet-on-dry multiple coating method, the upper layer coatability is very poor and coating often fails when the upper layer is prepared as a thin layer to take advantages of the lower layer.

Moreover, when a magnetic tape is loaded on a video deck, not only the front face but also back face of the magnetic tape is slid on the guide hole and guide roll described above. Therefore, when the running property and running durability are poor on the back face, an irregular and drastic tension is exerted on the magnetic tape while running, which in turn deteriorates skew, jitter, S/N and other image or electromagnetic properties. In light of this fact, there has been proposed a method in which a back coat layer comprising a resin layer containing inorganic powder, for instance, is formed on the base face of the magnetic tape.

Also proposed is a method in which CB is used in place of the above-mentioned inorganic powder (e.g. Japanese Patent Examined Publication No. 17401/1977).

In this case, it is difficult to obtain average roughness of such a degree that ruggedness due to poor dispersibility is not transferred to the magnetic layer in a rolling condition and the surface is liable to be too rough.

Inorganic powder and carbon black are used in combination (Japanese Patent Publication Open to Public Inspection Nos. 210534/1984, 25022/1985 and 25023/1985) to obtain a synergetic effect, but this method remains to be further investigated.

The object of the present invention is to provide a magnetic recording medium (hereinafter referred to as magnetic tape) which has good electromagnetic conversion properties for overlay recording of both high and low frequency waves, which produces little drop-out (D/O) and sliding noise and which is good in running property and running durability.

According to the present invention there is provided a magnetic recording medium comprising a non-magnetic support having provided thereon a plurality of magnetic layers produced by a wet-on-wet extrusion coating method, wherein there is substantially no mixing zone between the uppermost magnetic layer and the magnetic layer adjacent thereto, and wherein said uppermost magnetic layer comprises carbon black having an average particle size of 70 nm to 500 nm, in an amount of 0.1 to 5.0 wt.%, based on the weight of ferromagnetic particles in said uppermost layer.

Attention is drawn to our co-pending European patent applications under publication numbers EP-A-373856 and EP-A-360175.

EP-A-373856 has a European filing date of 11th December 1989 and claims a Japanese priority date of 12th December 1988. However, the description in the European application as filed concerning the extrusion coating method was not described in the Japanese priority document. The feature that the plurality of magnetic layers are produced by a wet-on-wet extrusion coating method is an essential feature in the combination of the present invention, and accordingly EP-A-373856 is not a document of the type mentioned in Article 54(3) of the EPC in relation to the present invention as claimed.

EP-A-360175 also describes a magnetic recording medium, and is a document of the type described in Article 54(3) of the EPC. However that document contains no description concerning the average particle size range of the carbon black and the weight percentage range thereof, which are essential features in the combination of the present invention as claimed.

When the average grain size of the above CB is less than 70 nm, aggregation occurs due to poor dispersibility, which in turn deteriorates electromagnetic conversion properties and running durability. When it exceeds 500 nm, spacing loss occurs. When the content becomes below 0.1 part by weight (hereinafter referred to as wt) to 100 wt of the magnetic powder, the tape becomes liable to poor running. When it exceeds 5 wt, the electromagnetic conversion properties are deteriorated and D/O increases.

"Substantially no layer mixing" refers to a degree in which;

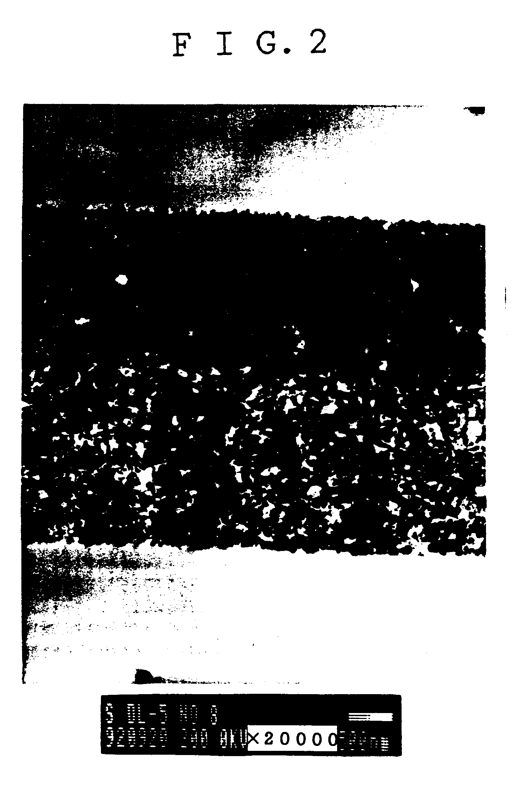

1) there is a visible boundary recognized by electron micro scope, as exemplified by a cross-sectional tomographic image of Fig. 2,

2) locate a boundary belt along the visible boundary in less than 0.1 μm width,

3) locate an examining area in 0.5 μm width each upper and lower side of the boundary belt,

4) count particles in each side of the examining area,

5) if number of magnetic particles mixed from the adjacent layer is less than 1.0% of total magnetic particle number; it is defined as no mixing zone between the two layers.

In the embodiment of the present invention, it is desirable to form a back coat layer (hereinafter referred to as a BC layer) containing 8 to 50 wt of CB with an average grain size of 70 to 500 nm to 100 wt of the all portion of the inorganic filler.

In the conventional wet-on-dry multiple coating method, the surface roughness of the already dried lower magnetic layer transfers itself to the upper layer, and the variance of solvent penetration in the lower layer, along with rapid diffusion of the upper layer solvent into the lower layer, hampers smooth extension of the upper layer paint. Particularly, when the upper layer is a thin layer, coating is often hampered considerably.

Using the wet-on-wet multiple coating method, the present invention permits the formation of a thin upper magnetic layer with a uniform film thickness as a result of elimination of these undesirable aspects.

The present invention also permits the formation of a multiple layer structure involving substantially no

layer mixing between the upper magnetic layer and the lower magnetic layer located thereunder.

To prevent upper and lower layer mixing, it is possible to use a method in which a common binder solvent solution concentration is used for the two paints to prevent interlayer diffusion of the binder and the solvent by simultaneous transfer of magnetic grains and other filler grains in the case of the simultaneous multiple coating method. In the case of the serial multiple coating method, it is possible to use a method in which the upper layer is formed at the time when the binder solvency solution concentrations become equal to each other.

It is also possible to form an interlayer free of magnetic grains between the upper and lower magnetic layers.

It is not desirable to use the method in which coating is conducted while an extending force is being exerted on the paint with a constant ratio of the magnetic paint feed rate per unit time and the coating speed as the rate of paint carriage from the coating point because it produces dragging or excess friction which causes interface derangement.

Good layer separation for high and low frequency waves can be thus achieved by the wet-on-wet multiple coating method to meet the design performance requirements in overlay recording of high and low frequency waves. This method also permits noise and D/O reduction.

Also, the present invention, by adding highly dispersible large grains of CB with an average grain size of 70 to 500 nm in the ratio mentioned above, permits dispersion of projections distributed at uniform optimum intervals in the upper magnetic layer as if spikes are set thereon while avoiding adverse effects of poor dispersion or aggregation of poorly dispersible fine CB grains to mitigate direct sliding between the head and the binder face with a great interlayer sliding resistance and maintain uniform stable spacing between the running head and the magnetic layer surface, thus providing regular and smooth running property and good running durability, eliminating sliding noise and providing optimum S/N ratio.

When forming a BC layer containing CB whose size and content are specified in accordance with the present invention, a significant effect on running property and running durability is obtained due to a spike effect as found in the above upper magnetic layer.

The wet-on-wet multiple coating method of the present invention may use the serial multiple coating method in which a number of coating positions are serially arranged along the coating direction and layers are serially formed or may use the simultaneous multiple coating method in which layers are formed at the same position, or may use them in combination.

As for magnetic field orientation, it is provided at the optimum drying point, but it can be conducted for each coating procedure in the serial multiple coating method.

The thickness of the uppermost magnetic layer and that of the magnetic layer below the uppermost layer are as follows.

Uppermost layer

0.01 to 1.0 μm more preferably 0.1 to 0.08 μm Layer below the uppermost layer

1.5 to 3.5 μm more preferably 2.0 to 3.0 μm

The magnetic layer of this type of magnetic recording medium is composed of the plurality of layers. Accordingly, the upper layer can be composed so that the recording and playback characteristics in the high frequency zone can be improved when the medium is applied for the video output use, and the lower layer can be composed so that the recording and playback characteristics in the relatively low frequency zone can be improved when the medium is applied for the chromatic output or audio output use. Consequently, the thickness of the upper layer is made thin so that the characteristics of both the upper and lower layers can be fully utilized.

The modes of coating for the present invention are exemplified in Fig. 1 (a) (b) and (c).

To obtain the double layer coating without mixing zone in between is to utilize coaters (a), (b) or (c) as illustrated in Fig. 1. Among those, (b) is the most preferable. Concerning the (c), it is possible to control to make the mixing zone or not, by adjusting the angle of two channels, θ. Wider angle or lower viscosity makes wider mixing zone

Concerning (a), the coater 51 and 52 must be set-up as close as possible because the interval between lower coating and upper coating creates the possibility of being affected by out side factors.

The examples of CB with an average grain size of 20 to 40 nm used in the layers other than the upper most magnetic layer and the CB layer include the following:

Raven 5250, 1255, 1250, 1200, 1170, 1040, 1035, 1030, 1020, 890, 850, 825, produced by Columbian Carbon Co.

Black Pearls L, Regal 400, 600, 500R, 500, 330, 99, Vulcan XC-72, P, produced by Cabot Co. CF9, #50, 52, 45, 44, 40, 32, 30, 4000, MA-100, 7, 8, 11, produced by Mitsubishi Chemical Industry.

The examples of the above coarse CB with an average primary grain size of 70 to 500 nm include Raven 410 and MTP, both produced by Columbian Carbon Co., and Hs-500, produced by Asahi Carbon Co.

The particle size CB can be determined by video tape cross section being treated by HCℓ+EtOH (1:1), photographed by electron microscope and measured each particle. The average value is calculated at n=200. Preferable range is 40 - 500 mμ and more preferably 70 - 500 nm, the most preferable range is 70 - 400 nm.

In the present invention, equipment and material technologies used to produce conventional magnetic tapes are used.

Examples of the magnetic substances which can be used for the present invention include magnetic oxides such as γ-$Fe_2O_3$, Co-containing γ-$Fe_2O_3$, Co-coated γ-$Fe_2O_3$, $Fe_3O_4$, Co-containing $Fe_3O_4$, Co-coated $Fe_3O_4$ and $CrO_2$,as well as various ferromagnetic substances such as metallic magnetic powders composed mainly of Fe, Ni and Co including Fe, Ni, Fe-Ni alloys, Fe-Co alloys, Fe-Ni-P alloys, Fe-Ni-Co alloys, Fe-Mn-Zn alloys, Fe-Ni-Zn alloys, Fe-Co-Ni-Cr alloys, Fe-Co-Ni-P alloys, Co-P alloys and Co-Cr alloys. These metallic magnetic substances may contain Si, Cu, Zn, Aℓ, P, Mn, Cr and other elements or their compounds as additives. Also used are iron nitride and hexagonal systems of ferrite such as barium ferrite.

The magnetic field intensity and the BET value of the magnetic powder used in the present invention are as follows. Upper layer

Hc: 700 to 1200 Oe preferably Hc: 720 to 1000 Oe Lower layer

Hc: 400 to 700 Oe preferably Hc: 450 to 700 Oe

Conventional binders can be used for the present invention, but it is preferable to use a functional group or a resin modified by introducing thereinto a functional group which forms an intramolecular salt, specifically a modified vinyl chloride resin, a modified polyurethane resin or a modified polyester resin.

The examples of the functional group in the resins mentioned above include $-SO_3M$, $-OSO_3M$, -COOM and

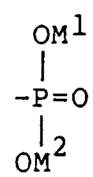

wherein M represents a hydrogen atom, lithium or sodium; $M^1$ and $M^2$ independently represent a hydrogen atom, lithium, potassium, sodium, or an alkyl group; $M^1$ and $M^2$ may be identical with each other or not.

These functional groups can be obtained by condensation via dehydrochlorination reaction between a resin such as vinyl chloride resin, polyester resin or polyurethane resin and a compound containing in its molecular structure a negative functional group and chlorine such as Cℓ-$CH_2CH_2SO_3M$, Cℓ-$CH_2CH_2OSO_2M$, $C_2$-$CH_2COOM$ or

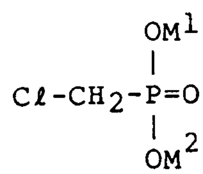

wherein M, $M^1$ and $m^2$ have the same definitions as above.

Among the resins thus obtained, preferable is a resin prepared by introducing a negative functional group into a vinyl chloride resin or a polyurethane resin.

The examples of the vinyl chloride resin include vinyl chloride-vinyl acetate-vinyl alcohol copolymers, vinyl chloride-vinyl propionate-vinyl alcohol copolymers, vinyl chloride-vinyl acetate-vinyl maleate-vinyl alcohol copolymers and vinyl chloride-vinyl propionate-vinyl maleate-vinyl alcohol copolymers.

These binders may be used in combination with conventionally used unmodified vinyl chloride resins, polyurethane resins or polyester resins, as well as fibrin resins, phenoxy resins. Thermoplastic resins, thermosetting resins, reactive resins and electron beam irradiation setting resins may also be used in combination in particular methods of use.

These resins can be used as structure binders for structural layers for the present invention, such as magnetic layers, back coat layers, protective layers or adhesive layers with an optimum combination of type and content chosen in light of their advantages and disadvantages.

To improve the magnetic layer durability of the magnetic recording medium of the present invention, various hardeners can be added to the magnetic paint; for example, isocyanide can be added.

Examples of aromatic isocyanates include tolylene diisocyanate (TDI) and adducts of active hydrogen compounds and isocyanates, having preferably a molecular weight of 100 to 3,000.

Examples of aliphatic isocyanates include hexamethylene diisocyanate (HMDI) and adducts of active hydrogen compounds and isocyanates, with having preferably a molecular weight of 100 to 3,000. Among the aliphatic isocyanates, non-alicyclic isocyanates and adducts thereof with active hydrogen compounds are preferable.

The magnetic paint used to form the above-mentioned magnetic layer may contain dispersants and other additives such as lubricants, polishing agents, and antistatic agents.

Examples of dispersants for the present invention include phosphates, amine compounds, alkyl sulfates, fatty amides, higher alcohols, polyethylene oxide, sulfosuccinic acid, sulfosuccinates, known surfactants and their salts, and salts of polymer dispersants with anionic organic group y (e.g., -COOH). These dispersants may be used singly or in combination.

Examples of lubricants include silicone oil, graphite, carbon black graft polymers, molybdenum disulfide, tungsten disulfide, lauric acid, myristic acid, fatty acid esters of a monobasic fatty acid with a carbon number of 12 to 16 and a monohydric alcohol wherein the total carbon number is 21 to 23 (wax). These lubricants are normally added in an amount of 0.2 to 20 parts by weight per 100 parts by weight of the binder.

Examples of polishing agents include fused alumina, silicon carbide, chromium oxide, corundum, artificial corundum, artificial diamond, garnet, emery (main components: corundum and magnetite). These polishing agents have normally an average grain size of 50 to 600 nm, preferably 100 to 400 nm, and are added in amounts of 1 to 20 parts by weight per 100 parts by weight of the binder.

Examples of antistatic agents include electroconductive powders such as carbon black, graphite, tin oxide-antimony oxide compounds and titanium oxide-tin oxide-antimony oxide compounds; natural surfactants such as saponin; nonionic surfactants such as alkylene oxide surfactants, glycerol surfactants and glycidol surfactants; cationic surfactants such as higher alkylamines, quaternary ammonium salts, pyridine and other heterocycles, phosphoniums and sulfoniums; anionic surfactants containing an acidic group such as carboxylic acid group, sulfonic acid group, phosphoric acid group, sulfate group or phosphate group; and amphoteric surfactants such as amino acids, aminosulfonic acids and sulfuric or phosphoric acid esters of aminoalcohol.

Examples of the solvent formulated in the above-mentioned paint or the diluent for coating this paint include ketones such as acetone, methyl ethyl ketone, methyl isobutyl ketone and cyclohexanone; alcohols such as methanol, ethanol, propanol and butanol; esters such as methyl acetate, ethyl acetate, butyl acetate, ethyl lactate and ethylene glycol monoacetate; ethers such as glycol dimethyl ether, glycol monoethyl ether, dioxane and tetrahydrofuran; aromatic hydrocarbons such as benzene, toluene and xylene; and halogenated hydrocarbons such as methylene chloride, ethylene chloride, carbon tetrachloride, chloroform and dichlorobenzene.

Examples of materials for the support include polyesters such as polyethylene terephthalate and polyethylene-2,6-naphthalate; polyolefins such as polypropylene; cellulose derivatives such as cellulose triacetate and cellulose diacetate; and plastics such as polyamide and polycarbonate. Also usable are metals such as Cu, Aℓ and Zn and ceramics such as glass, boron nitride and silicon carbide.

The thickness of these supports is normally about 3 to 100 μm, preferably 5 to 50 μm, in a film or sheet form, and about 30 μm to 10mm in a disc or card form. In a drum form, the support is used in the form of a cylinder, with the shape determined depending on the type of recorder used.

An interlayer may be formed between the support and the magnetic layer to improve adhesion.

The magnetic layers can be formed on the support by the methods of simultaneous and serial extrusion coating, reverse roll + extrusion and gravure roll + extrusion.

It is also possible to use in combination any one of air doctor coating, blade coating, air knife coating, squeeze coating, impregnation coating, reverse roll coating, transfer roll coating, gravure coating, kiss coating, cast coating and spray coating.

EXAMPLES

The present invention is hereinafter described in more detail by means of the following examples.

Note that the compositional amounts (parts) in the magnetic paints and BC layer paint formulations described in the following examples and comparison examples are parts by weight for the same weight unit (e.g. kg) as a common standard.

Example 1

Lower layer magnetic paint A (parts)

| | |
|---|---|
| Co-γ-$Fe_2O_3$ (Hc = 680 Oe, BET value 30 $m^2$/g) | 100 |
| Sulfo-modified vinyl chloride-vinyl acetate-vinyl alcohol copolymer | 10 |
| Polyester polyurethane resin | 7 |
| Myristic acid | 2 |
| Stearic acid | 1 |
| Butyl stearate | 1 |
| Carbon black (average primary grain size: 20 nm) | 2.0 |
| Polyisocyanate | 5 |
| Butyl acetate | 300 |

Upper layer magnetic paint B (parts)

| | |
|---|---|
| Co-γ-$Fe_2O_3$ (Hc = 720 Oe, BET value 40 $m^2$/g) | 100 |
| Sulfo-modified vinyl chloride-vinyl acetate-vinyl alcohol copolymer | 10 |
| Polyester polyurethane resin | 7 |
| Stearic acid | 3.0 |
| Butyl stearate | 1.0 |
| Carbon black (average primary grain size: 85 nm) | 2.0 |
| α-$A\ell_2O_3$ (average grain size 0.3 nm) | 1.0 |
| Polyisocyanate | 5 |
| Butyl acetate | 300 |

Magnetic Paints A and B described above were coated on a polyethylene terephthalate support of 15 µm in thickness using a coater shown in Fig. 1 (a) through (c) so that the dry film thickness became 2.0 µm for A and 1.0 µm for B, wherein B was coated on A while A remained wet. Magnetic yield was oriented using a magnet of 1500 Gauss intensity. After drying, supercalendering was conducted, and the obtained film was slitted to a width of 1.25 (0.5 inch) to yield a video tape. In serial multiple coating, the amount of butyl acetate, the solvent for Formulations A and B, was changed.

Example 2

A video tape was produced in the same manner as in Example 1 except that Co-$\gamma$-$Fe_2O_3$ having an Hc of 680 Oe in the lower layer magnetic paint was replaced with that having an Hc of 700 Oe, 3 parts of $\alpha$-$A\ell_2O_3$ (average grain size 0.2 nm) was added, and Co-$\gamma$-$Fe_2O_3$ having an Hc of 720 Oe in the upper layer magnetic paint was replaced with that having an Hc of 780 Oe.

Example 3

A video tape was produced in the same manner as in Example 2 except that carbon black was removed from the lower layer magnetic paint and the CB content of the upper layer magnetic paint was changed from 2.0 parts to 5.0 parts.

Example 4

A video tape was produced in the same manner as in Example 2 except that the grain size of carbon black in the lower layer magnetic paint was changed from 20 nm to 40 nm, its content was increased from 2.0 parts to 4.0 parts, the grain size of carbon black in the upper layer magnetic paint was changed from 85 nm to 150 nm, and its content was changed to 3.0 parts.

Example 5

A video tape was produced in the same manner as in Example 4 except that carbon black was removed from the lower layer magnetic paint and the CB content of the upper layer magnetic paint was changed from 3.0 parts to 4.0 parts.

Example 6

A video tape was produced in the same manner as in Example 3 except that the CB content in the upper layer magnetic paint was reduced from 5.0 parts to 2.0 parts and 2.0 parts of CB of 20 nm in diameter was added to the upper layer magnetic paint as well as large grain CB of the present invention.

Example 7

A video tape was produced in the same manner as in Example 5 except that the CB content in the upper layer magnetic paint was reduced from 4.0 parts to 2.0 parts, and 5.0 parts of CB of 40 nm in diameter was added to the upper layer magnetic paint.

Example 8

BC Paint C described above was coated on the back face of the video tape prepared in Example 2 so that the dry film thickness became 1.0 µm.

Example 9

The same procedure as in Example 8 was followed except that the grain size of CB in BC Paint C was changed.

Example 10

BC Paint C described above was coated on the back face of the video tape prepared in Example 7 so that the dry film thickness became 1.0 µm.

No layer mixing occurred in the interface between laminated magnetic layers obtained in accordance with the above examples.

Brief details of further examples 11 to 20 are given in Table 1.

Comparative Example 1

The lower layer magnetic paint described in Example 2 was coated on a polyethylene terephthalate support of 15 μm in thickness using a reverse roll while the support is running so that the dry film thickness became 2.0 μm. While remaining wet, the magnetic layer thus formed was oriented using a magnet of 1500 Gauss intensity. After drying, the magnetic layer was subjected to supercalendering. Then, an upper layer magnetic paint was coated using a reverse roll so that the dry film thickness became 1.5 μm. While remaining wet, the magnetic layer thus formed was oriented using the magnet described above. After drying, the magnetic layer was subjected to supercalendering and slitted to a width of 1.25 cm (0.5 inch) to yield a video tape.

Comparative Example 2

Composition of the magnetic mateiral for use in the lower layer A

| | |
|---|---|
| Co-$\gamma Fe_2Ox$ (x=1.45 Hc: 650 Oe, average major axis length 0.32 μm S BET specific surface: 30 $m^2/g$) | 100 parts |
| Vinyl chloride/vinyl acetate/ maleic anhydride copolymer (Compounding ratio 87:8:5 degree of polymerization 400) | 12 parts |
| Polyurethane resin (manufactured by Dainippon Ink Chemical Industry Co. Crysbon 7209) | 6 parts |
| Stearic acid | 3.0 parts |
| Stearic acid butyl | 1.0 parts |
| Polyisocyanate (manufactured by Nippon Polyurethane Co. Colonate L-75) | 6 parts |
| Butyl acetate | 90 parts |
| Methyl ethyl ketone | 70 parts |
| Cyclohexanone | 20 parts |

Composition of the magnetic material for use in the upper layer B

| | |
|---|---|
| Co-$\gamma Fe_2Ox$ (x=1.45 Hc: 900 Oe, average major axis length 0.25 µm S BET specific surface: 42 $m^2/g$) | 100 parts |
| Vinyl chloride/vinyl acetate/ maleic anhydride copolymer (Compounding ratio 87:8:5 degree of polymerization 400) | 12 parts |
| Polyurethane resin (manufactured by Dainippon Ink Chemical Industry Co. Crysbon 7209) | 6 parts |
| Carbon black | 1.0 parts |
| $\alpha$-$Al_2O_3$ | 3.0 parts |
| Stearic acid | 3.0 parts |
| Polyisocyanate (manufactured by Nippon Polyurethane Co. Colonate L-75) | 6 parts |
| Butyl acetate | 105 parts |
| Methyl ethyl ketone | 95 parts |
| Cyclohexanone | 20 parts |

The magnetic material for use in the lower layer was coated on a support made from polyethylene terephthalate of 15 µm thick while the support was running so that the dry thickness of the magnetic layer could be 3.0 µm, wherein reverse rollers were used to coat the material. While the coated magnetic material for use in the lower layer was wet, the magnetic layer for use in the upper layer was coated with reverse rollers so that the dry thickness could be 0.7 µm. While the magnetic layers were wet, they were magnetically oriented by the above-described magnet. After the magnetic layers were dried, the super-calender-treatment was conducted on them and the tape was slit to the width of 1.25 cm (1/2 inch) to make a video tape.

Comparative Example 3

In Comparative Example 3, a video tape was manufactured under the same conditions as those of Comparative Example 2 except for having the tape pass on a magnet to form a mixing zone under the following conditions, wherein the tape was passed on the magnet while the coated magnetic material of the upper and

lower layers was wet.

The condition to form a mixing zone between the upper and the lower layers

A cylindrical cobalt magnet (3000 gauss) is located on the support surface to which magnetic layers are not provided, wherein the magnet is vertically placed on the surface of the support and the N pole of the magnet is located close to the surface.

Comparative Example 4

The video tape of Comparative Example 4 was manufactured under the same conditions as those of Example 2 except for coating the magnetic material on the support so that the thickness of the dried lower layer could be 3 μm and the thickness of the dried upper layer could be 1 μm.

Comparative Example 5

The video tape of Comparative Example 5 was manufactured under the same conditions as those of Example 3 except for coating the magnetic material so that the thickness of the dried lower layer could be 3 μm and the thickness of the dried upper layer could be 1 μm.

Comparative Examples 6 and 7

Samples were prepared in the same manner as in Comparative Example 4 using the magnetic layers shown in Comparative Example 4 and the CB sizes and contents shown in Table 2.

Example 21

The video tape of this example was manufactured under the same conditions as those of Example 13 except for the particle size of CB in the uppermost layer, wherein the particle size was changed from 400 nm to 500 nm.

Example 22

The video tape of this example was manufactured under the same conditions as those of Example 13 except for the particle size of CB in the uppermost layer, wherein the particle size was changed from 400 nm to 30 nm.

Examples 21 and 22 are omitted from Tables 1 and 2.

Table 1

| | | | Example 1 | Example 2 | Example 3 | Example 4 | Example 5 | Example 6 |
|---|---|---|---|---|---|---|---|---|
| Upper-most layer B | Magnetic powder | Hc | 720 (Oe) | 780 | 780 | 780 | 780 | 780 |
| | | BET | 40 ($m^2/g$) | 40 | 40 | 40 | 40 | 40 |
| | Vinyle chloride resin | Polar radical | $-SO_3Na$ | $-SO_3Na$ | $-SO_3Na$ | $-SO_3Na$ | $-SO_3Na$ | $-SO_3Na$ |
| | | | Vinyl chloride Vinyl acetate Vinyl alcohole | Vinyl chloride Vinyl acetate Vinyl alcohole | Vinyl chloride Vinyl acetate Vinyl alcohole | Vinyl chloride Vinyl acetate Vinyl alcohole | Vinyl chloride Vinyl acetate Vinyl alcohole | Vinyl chloride Vinyl acetate Vinyl alcohole |
| | Polyurethane resin | Polar radical | | | | | | |
| | | | Polyester polyurethane resin | Polyester polyurethane resin | Polyester polyurethane resin | Polyester polyurethane resin | Polyester polyurethane resin | Polyester polyurethane resin |
| | $\alpha-Al_2O_3$ particle size (nm) | | 300 | 300 | 300 | 300 | 300 | 300 |
| | CB | Particle size | 85 (nm) | 85 | 85 | 150 | 150 | 85 \| 20 |
| | | Content | 2.0 (parts) | 2.0 | 5.0 | 3.0 | 4.0 | 2.0 \| 2.0 |
| | Thickness of layer (μm) | | 1.0 (μm) | 1.0 | 1.0 | 1.0 | 1.0 | 1.0 |
| Lower-most layer A | Magnetic powder | Hc | 680 (Oe) | 700 | 700 | 700 | 700 | 700 |
| | | BET | 30 ($m^2/g$) | 30 | 30 | 30 | 30 | 30 |
| | Vinyle chloride resin | Polar radical | $-SO_3Na$ | $-SO_3Na$ | $-SO_3Na$ | $-SO_3Na$ | $-SO_3Na$ | $-SO_3Na$ |
| | | | Vinyl chloride Vinyl acetate Vinyl alcohole | Vinyl chloride Vinyl acetate Vinyl alcohole | Vinyl chloride Vinyl acetate Vinyl alcohole | Vinyl chloride Vinyl acetate Vinyl alcohole | Vinyl chloride Vinyl acetate Vinyl alcohole | Vinyl chloride Vinyl acetate Vinyl alcohole |
| | Polyurethane resin | Polar radical | | | | | | |
| | | | Polyester polyurethane resin | Polyester polyurethane resin | Polyester polyurethane resin | Polyester polyurethane resin | Polyester polyurethane resin | Polyester polyurethane resin |
| | $\alpha-Al_2O_3$ particle size (nm) | | | 0.2 μm (content 3 parts) | 0.2 μm (content 3 parts) | 0.2 μm (content 3 parts) | 0.2 μm (content 3 parts) | 0.2 μm (content 3 parts) |
| | CB | Particle size | 20 (nm) | 20 | | 40 | | |
| | | Content | 2.0 (parts) | 2.0 | | 4.0 | | |
| | Thickness of layer (μm) | | 2.0 (μm) | 2.0 | 2.0 | 2.0 | 2.0 | 2.0 |
| Method of coating | Coater | | Coater (b) | Coater (b) | Coater (b) | Coater (b) | Coater (b) | Coater (b) |
| | Mixing zone | | None | None | None | None | None | None |
| Back-coat | CB | Particle size | | | | | | |
| | | Content | | | | | | |

Table 1 (Cont'd)

| | | | Example 7 | Example 8 | Example 9 | Example 10 | Example 11 | Example 12 |
|---|---|---|---|---|---|---|---|---|
| Upper-most layer B | Magnetic powder | Hc | 780 (Oe) | 780 | 780 | 780 | 1000 | 900 |
| | | BET | 40 ($m^2/g$) | 40 | 40 | 40 | 60 | 55 |
| | Vinyle chloride resin | Polar radical | $-SO_3Na$ | $-SO_3Na$ | $-SO_3Na$ | $-SO_3Na$ | -COOH | $-SO_3Na$ |
| | | | Vinyl chloride Vinyl acetate Vinyl alcohole | Vinyl chloride Vinyl acetate Vinyl alcohole | Vinyl chloride Vinyl acetate Vinyl alcohole | Vinyl chloride Vinyl acetate Vinyl alcohole | Vinyl chloride Vinyl acetate | Vinyl chloride |
| | Polyurethane resin | Polar radical | | | | | $-SO_3Na$ | $-PO_3K$ |
| | | | Polyester polyurethane resin | Polyester polyurethane resin | Polyester polyurethane resin | Polyester polyurethane resin | Polyurethane resin | Polyurethane resin |
| | α-$Al_2O_3$ particle size (nm) | | 300 | 300 | 300 | 300 | 60 | 100 |
| | CB | Particle size | 150 (nm) 40 | 85 | 85 | 150 40 | 41 | 53 |
| | | Content | 2.0 (parts) 5.0 | 2.0 | 2.0 | 2.0 5.0 | 0.1 | 0.5 |
| | Thickness of layer (μm) | | 1.0 (μm) | 1.0 | 1.0 | 1.0 | 0.01 | 0.25 |
| Lower-most layer A | Magnetic powder | Hc | 700 (Oe) | 700 | 700 | 700 | 800 | 700 |
| | | BET | 30 ($m^2/g$) | 30 | 30 | 30 | 45 | 40 |
| | Vinyle chloride resin | Polar radical | $-SO_3Na$ | $-SO_3Na$ | $-SO_3Na$ | $-SO_3Na$ | -COOH | $-SO_3Na$ |
| | | | Vinyl chloride Vinyl acetate Vinyl alcohole | Vinyl chloride Vinyl acetate Vinyl alcohole | Vinyl chloride Vinyl acetate Vinyl alcohole | Vinyl chloride Vinyl acetate Vinyl alcohole | Vinyl chloride Vinyl acetate | Vinyl chloride |
| | Polyurethane resin | Polar radical | | | | | $-SO_3Na$ | $-PO_3K$ |
| | | | Polyester polyurethane resin | Polyester polyurethane resin | Polyester polyurethane resin | Polyester polyurethane resin | Polyurethane resin | Polyurethane resin |
| | α-$Al_2O_3$ particle size (mμ) | | 0.2 μm (content 3 parts) | 0.2 μm (content 3 parts) | 0.2 μm (content 3 parts) | 0.2 μm (content 3 parts) | | |
| | CB | Particle size | 40 (nm) | 20 | 20 | 40 | | 50 |
| | | Content | 4.0 (parts) | 2.0 | 2.0 | 4.0 | | 7.0 |
| | Thickness of layer (nm) | | 2.0 (μm) | 2.0 | 2.0 | 2.0 | 3.5 | 3.5 |
| Method of coating | Coater | | Coater (b) | Coater (b) | Coater (b) | Coater (b) | Coater (b) | Coater (b) |
| | Mixing zone | | None | None | None | None | None | None |
| Back-coat | CB | Particle size | | 300 (nm) | 400 | 300 | 400 | |
| | | Content | | 8 (parts) | 10 | 8 | 20 | |

Table 1 (Cont'd)

| | | | Example 13 | Example 14 | Example 15 | Example 16 | Example 17 | Example 18 |
|---|---|---|---|---|---|---|---|---|
| Upper-most layer B | Magnetic powder | Hc | 850 (Oe) | 800 | 850 | 850 | 850 | 850 |
| | | BET | 55 ($m^2/g$) | 50 | 55 | 55 | 55 | 55 |
| | Vinyle chloride resin | Polar radical | $-SO_3Na$ | $-SO_3Na$ | $-SO_3Na$ | $-SO_3Na$ | $-SO_3Na$ | $-SO_3Na$ |
| | | | Vinyl chloride | Vinyl chloride | Vinyl chloride | Vinyl chloride | Vinyl chloride | Vinyl chloride |
| | Polyurethane resin | Polar radical | $-SO_3Na$ | $-SO_3Na$ | $-SO_3Na$ | $-SO_3Na$ | $-SO_3Na$ | $-SO_3Na$ |
| | | | Polyurethane resin | Polyurethane resin | Polyurethane resin | Polyurethane resin | Polyurethane resin | Polyurethane resin |
| | $\alpha$-$Al_2O_3$ particle size (nm) | | 400 (nm) | 600 | 400 | 400 | 400 | 400 |
| | CB | Particle size | 200 (nm) | 70 | 200 | 200 | 40 | 500 |
| | | Content | 0.2 (parts) | 0.5 | 0.2 | 0.2 | 0.2 | 0.2 |
| | Thickness of layer (μm) | | 0.50 (μm) | 0.75 | 0.5 | 0.5 | 0.5 | 0.5 |
| Lower-most layer A | Magnetic powder | Hc | 700 (Oe) | 700 | 700 | 700 | 700 | 700 |
| | | BET | 40 ($m^2/g$) | 40 | 40 | 40 | 40 | 40 |
| | Vinyle chloride resin | Polar radical | $-SO_3Na$ | $-SO_3Na$ | $-SO_3Na$ | $-SO_3Na$ | $-SO_3Na$ | $-SO_3Na$ |
| | | | Vinyl chloride | Vinyl chloride | Vinyl chloride | Vinyl chloride | Vinyl chloride | Vinyl chloride |
| | Polyurethane resin | Polar radical | $-SO_3Na$ | $-SO_3Na$ | $-SO_3Na$ | $-SO_3Na$ | $-SO_3Na$ | $-SO_3Na$ |
| | | | Polyurethane resin | Polyurethane resin | Polyurethane resin | Polyurethane resin | Polyurethane resin | Polyurethane resin resin |
| | $\alpha$-$Al_2O_3$ particle size (nm) | | | | | | | |
| | CB | Particle size | 40 (nm) | 50 | 40 | 40 | 40 | 40 |
| | | Content | 2.0 (parts) | 7.0 | 2.0 | 2.0 | 2.0 | 2.0 |
| | Thickness of layer (μm) | | 3.0 (μm) | 3.0 | 3.0 | 3.0 | 3.0 | 3.0 |
| Method of coating | Coater | | Coater (b) | Coater (b) | Coater (a) | Coater (c) | Coater (b) | Coater (b) |
| | Mixing zone | | None | None | None | None | None | None |
| Back-coat | CB | Particle size | 400 (nm) | | 400 | 400 | 400 | 400 |
| | | Content | 20 (parts) | | 20 | 20 | 20 | 20 |

Table 1 (Cont'd)

| | | | Example 19 | Example 20 |
|---|---|---|---|---|
| Uppermost layer B | Magnetic powder | Hc | 850 (Oe) | 680 |
| | | BET | 55 ($m^2/g$) | 55 |
| | Vinyle chloride resin | Polar radical | $-SO_3Na$ | $-SO_3Na$ |
| | | | Vinyl chloride | Vinyl chloride |
| | Polyurethane resin | Polar radical | $-SO_3Na$ | $-SO_3Na$ |
| | | | Polyurethane resin | Polyurethane resin |
| | α-$Al_2O_3$ particle size (nm) | | 400 (nm) | 400 |
| | CB | Particle size | 200 (nm) | 200 |
| | | Content | 6.0 (parts) | 6.0 |
| | Thickness of layer (µm) | | 0.5 (µm) | 1.5 |
| Lowermost layer A | Magnetic powder | Hc | 700 (Oe) | 390 |
| | | BET | 40 ($m^2/g$) | 40 |
| | Vinyle chloride resin | Polar radical | $-SO_3Na$ | $-SO_3Na$ |
| | | | Vinyl chloride | Vinyl chloride |
| | Polyurethane resin | Polar radical | $-SO_3Na$ | $-SO_3Na$ |
| | | | Polyurethane resin | Polyurethane resin |
| | α-$Al_2O_3$ particle size (nm) | | | |
| | CB | Particle size | 40 (nm) | 40 |
| | | Content | 2.0 (parts) | 2.0 |
| | Thickness of layer (µm) | | 3.0 (µm) | 2.0 |
| Method of coating | Coater | | Coater (b) | Coater (b) |
| | Mixing zone | | None | None |
| Back-coat | CB | Particle size | 400 (nm) | 400 |
| | | Content | 20 (parts) | 20 |

Table 1 (Cont'd)

| | | | Comparative Example 1 | Comparative Example 2 | Comparative Example 3 | Comparative Example 4 | Comparative Example 5 |
|---|---|---|---|---|---|---|---|
| Uppermost layer B | Magnetic powder | Hc | 780 (Oe) | 780 | 780 | 780 | 780 |
| | | BET | 40 ($m^2/g$) | 40 | 40 | 40 | 40 |
| | Vinyle chloride resin | Polar radical | $-SO_3Na$ | $-SO_3Na$ | $-SO_3Na$ | $-SO_3Na$ | $-SO_3Na$ |
| | | | Vinyl chloride Vinyl acetate Vinyl alcohole | Vinyl chloride Vinyl acetate Vinyl alcohole | Vinyl chloride Vinyl acetate Vinyl alcohole | Vinyl chloride Vinyl acetate Vinyl alcohole | Vinyl chloride Vinyl acetate Vinyl alcohole |
| | Polyurethane resin | Polar radical | | | | | |
| | | | Polyester polyurethane resin | Polyester polyurethane resin | Polyester polyurethane resin | Polyester polyurethane resin | Polyester polyurethane resin |
| | $\alpha-Al_2O_3$ particle size (nm) | | 300 (nm) | 300 | 300 | 300 | 300 |
| | CB | Particle size | 85 (nm) | 85 | 85 | 85 | 85 |
| | | Content | 2.0 (parts) | 2.0 | 2.0 | 2.0 | 2.0 |
| | Thickness of layer (μm) | | 1.5 (μm) | 0.7 | 0.7 | 1.0 | 1.0 |
| Lowermost layer A | Magnetic powder | Hc | 700 (Oe) | 700 | 700 | 700 | 700 |
| | | BET | 30 ($m^2/g$) | 30 | 30 | 30 | 30 |
| | Vinyle chloride resin | Polar radical | $-SO_3Na$ | $-SO_3Na$ | $-SO_3Na$ | $-SO_3Na$ | $-SO_3Na$ |
| | | | Vinyl chloride Vinyl acetate Vinyl alcohole | Vinyl chloride Vinyl acetate Vinyl alcohole | Vinyl chloride Vinyl acetate Vinyl alcohole | Vinyl chloride Vinyl acetate Vinyl alcohole | Vinyl chloride Vinyl acetate Vinyl alcohole |
| | Polyurethane resin | Polar radical | | | | | |
| | | | Polyester polyurethane resin | Polyester polyurethane resin | Polyester polyurethane resin | Polyester polyurethane resin | Polyester polyurethane resin |
| | $\alpha-Al_2O_3$ particle size (nm) | | 0.2 μm (content 3 parts) | 0.2 μm (content 3 parts) | 0.2 μm (content 3 parts) | 0.2 μm (content 3 parts) | 0.2 μm (content 3 parts) |
| | CB | Particle size | 20 (nm) | | | | |
| | | Content | 2.0 (parts) | | | | |
| | Thickness of layer (μm) | | 2.0 (μm) | 3.0 | 3.0 | 3.0 | 3.0 |
| Method of coating | Coater | | Reverse roller | Reverse roller | Reverse roller | Reverse roller | Reverse roller |
| | Mixing zone | | None | None | Yes | None | Yes |
| Back-coat | CB | Particle size | | | | | |
| | | Content | | | | | |

Table 2

| | Mixing zone | L-S/N (dB) | C-S/N (dB) | Sliding noise (dB) | Upperlayer coatability | D/O Times/min | Interlayer friction | Running property |
|---|---|---|---|---|---|---|---|---|
| Example 1 | None | 0 | 0 | +0.8 | Good | 2 | 0.16 | Satisfactory |
| Example 2 | None | +0.1 | 0 | +0.6 | Good | 4 | 0.16 | Satisfactory |
| Example 3 | None | +0.5 | +0.8 | +0.4 | Good | 3 | 0.18 | Satisfactory |
| Example 4 | None | +0.2 | +0.5 | +0.6 | Good | 6 | 0.18 | Satisfactory |
| Example 5 | None | +0.7 | +1.2 | +0.5 | Good | 5 | 0.16 | Satisfactory |
| Example 6 | None | +0.8 | +0.4 | +0.7 | Good | 4 | 0.17 | Satisfactory |
| Example 7 | None | +0.6 | +1.0 | +0.7 | Good | 4 | 0.17 | Satisfactory |
| Example 8 | None | +2.6 | +1.0 | +0.8 | Good | 2 | 0.21 | Satisfactory |
| Example 9 | None | +3.2 | +1.6 | +0.8 | Good | 2 | 0.25 | Satisfactory |
| Example 10 | None | +3.0 | +2.0 | +0.6 | Good | 2 | 0.20 | Satisfactory |
| Example 11 | None | +2.1 | +1.8 | +2.8 | Good | 10 | 0.24 | Satisfactory |
| Example 12 | None | +2.4 | +1.0 | +2.4 | Good | 6 | 0.20 | Satisfactory |
| Example 13 | None | +3.6 | +3.2 | +0.6 | Good | 3 | 0.15 | Satisfactory |
| Example 14 | None | +0.9 | +1.0 | +0.7 | Good | 5 | 0.18 | Satisfactory |
| Example 15 | None | +1.5 | +1.2 | +1.0 | Good | 7 | 0.22 | Satisfactory |

Table 2 (Cont'd)

| | Mixing zone | L-S/N (dB) | C-S/N (dB) | Sliding noise (dB) | Upperlayer coatability | D/O Times/min | Interlayer friction | Running property |
|---|---|---|---|---|---|---|---|---|
| Example 16 | None | +1.8 | +1.3 | +2.8 | Good | 9 | 0.21 | Satisfactory |
| Example 17 | None | +2.1 | +2.3 | +4.0 | Good | 8 | 0.21 | Satisfactory |
| Example 18 | None | +2.6 | +2.8 | +5.2 | Good | 9 | 0.22 | Satisfactory |
| Example 19 | None | +1.5 | +0.8 | +0.8 | Good | 8 | 0.24 | Satisfactory |
| Example 20 | None | +0 | +0.1 | +1.5 | Good | 9 | 0.24 | Satisfactory |
| Example 21 | None | -0.9 | +1.4 | +3.5 | Good | 7 | 0.18 | Satisfactory |
| Example 22 | None | +1.6 | -1.7 | +4.5 | Good | 24 | 0.36 | Satisfactory |
| Comparative Example 1 | Yes | 0 | -0.8 | +0.6 | Good | 15 | 0.66 | After one hundredth passes stopped |
| Comparative Example 2 | Yes | -2.1 | -4.8 | +6.5 | Unevenness | 136 | 0.37 | Satisfactory |
| Comparative Example 3 | Yes | -5.2 | -2.4 | +9.0 | Unevenness | 110 | 0.37 | Satisfactory |
| Comparative Example 4 | Yes | +0.1 | -0.2 | +9.8 | Good | 13 | 0.36 | Satisfactory |
| Comparative Example 5 | Yes | +0.1 | 0 | +12.0 | Good | 15 | 0.37 | Satisfactory |

Methods of property determination:

L-S/N: Measured using a color video noise meter (Shibasoku 925 D/1).
C-S/N: Measured using a color video noise meter (Shibasoku 925 D/1).

Sliding noise:

(i) Image reproduction was conducted without tape running and the system noise was measured using a spectrum analyzer.

(ii) 10 cycles of 1 minute image reproduction was repeated and the sliding noise was measured using a spectrum analyzer.

(iii) The noise level near 9 MHz was measured for 10 cycles of pass in comparison with the system noise as the reference value (0 db).

D/O: The average value of drop-out was obtained for every one minute over the whole measured length of the tape using a drop-out counter VD-5M, produced by Victor Company of Japan, using the output whose retention time was not less than 15 μs and which involved an RF envelope output reduction of not less than 20 dB as the reference value taken as 1 time of drop-out.

Interlayer friction:

Interlayer friction was measured using an MSC tape running tester, produced by Yokohama System Co., at a tape speed of 0.26 cm/sec and a tape tension of 5.0 g.

Running property test:

The tape condition was observed after 400 cycles of pass under constant temperature constant humidity conditions of 40°C and 80% RH.

Upper layer coatability:

The coating surface condition was observed at a coating speed of 100 m/min.

As is evident from the performance obtained in Examples, the present invention provides a tape whose electromagnetic properties are characterized by excellent S/N ratio both for luminescence and chromatic signals and little sliding noise and which are excellent in D/O, upper layer coatability and other durability properties. In addition, when using a BC layer on the back face, the present invention permits the obtainment of a tape which is excellent in running property with reduced interlayer friction.

Brief Explanation of the Drawing

Fig. 1 shows schematic diagrams of an embodiment of the present invention.

1...Upper magnetic layer
2...Lower magnetic layer
3...Non-magnetic support
5, 51 and 52...Coater heads

## Claims

1. A magnetic recording medium comprising a non-magnetic support having provided thereon a plurality of magnetic layers produced by a wet-on-wet extrusion coating method, wherein there is substantially no mixing zone between the uppermost magnetic layer and the magnetic layer adjacent thereto, and wherein said uppermost magnetic layer comprises carbon black having an average particle size of 70 nm to 500 nm, in an amount of 0.1 to 5.0 wt.%, based on the weight of ferromagnetic particles in said uppermost layer.

2. A medium according to Claim 1 wherein between the uppermost magnetic layer and the adjacent magnetic layer there is a visible border recognizable on a tomographic picture taken by an electron microscope.

3. A medium according to Claim 1 or Claim 2 wherein the coercive force of the ferromagnetic particles in the uppermost magnetic layer is 700 to 1200 Oe and that of the ferromagnetic particles in the adjacent magnetic layer is 400 to 700 Oe.

4. A medium according to any one of Claims 1 to 3 wherein at least one of the layers comprises a binder

resin having a $-SO_3M$, $-OSO_3M$, -COOM, or

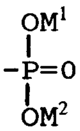

group, wherein M is a hydrogen, lithium or sodium atom; $M^1$ or $M^2$ is a hydrogen, lithium, sodium, or potassium atom or an alkyl group; and $M^1$ and $M^2$ are identical or different.

5. A medium according to Claim 4 wherein the layer containing the binder is the uppermost magnetic layer.

6. A medium according to Claim 5 wherein the binder comprises a vinylchloride resin or a polyurethane resin.

7. A medium according to Claim 6 wherein the vinylchloride resin or the polyurethane resin comprises the $-SO_3M$ group.

8. A medium according to any one of Claims 4 to 7 wherein the uppermost magnetic layer and the adjacent magnetic layer thereto comprise at least one binder.

9. A medium according to Claim 8 wherein the uppermost magnetic layer and the adjacent magnetic layer thereto comprise at least one binder selected from the group of the polyvinylchloride resins and the polyurethane resins.

10. A medium according to Claim 9 wherein at least one said binder comprises the $-SO_3M$ group.

11. A medium according to any one of Claims 1 to 10 wherein the thickness of each of the uppermost magnetic layer and of the adjacent magnetic layer is 0.01 to 1.0 $\mu$m and 1.5 to 3.5 $\mu$m respectively.

12. A medium according to any one of Claims 1 to 11 wherein the uppermost magnetic layer comprises $\alpha$-$Al_2O_3$ of average particle size 50 to 600 nm.

13. A medium according to any one of Claims 1 to 12 wherein the non-magnetic support comprises a back coat containing carbon black particles in an average particle size of 70 to 500 nm, in an amount of 8 to 50 wt.% of total inorganic filler.

14. A medium according to any one of Claims 1 to 13 wherein the layers other than the uppermost magnetic layer are without $\alpha$-$Al_2O_3$.

15. A medium according to any one of Claims 1 to 14 wherein the layers other than the uppermost magnetic layer are without carbon black.

## Patentansprüche

1. Magnetisches Aufzeichnungsmaterial, umfassend einen nicht-magnetischen Schichtträger mit mehreren darauf befindlichen und durch Naß-auf-Naß-Strangpreßbeschichtung hergestellten magnetischen Schichten, wobei es praktisch keine Mischzone zwischen der obersten magnetischen Schicht und der dieser benachbart angeordneten magnetischen Schicht gibt und wobei die oberste magnetische Schicht Ruß einer durchschnittlichen Teilchengröße von 70 nm bis 500 nm in einer Menge von 0,1 - 5,0 Gew.-%, bezogen auf das Gewicht der ferromagnetischen Teilchen in einer obersten Schicht, enthält.

2. Aufzeichnungsmaterial nach Anspruch 1, wobei zwischen der obersten magnetischen Schicht und der dieser benachbart angeordneten magnetischen Schicht eine auf einem mit einem Elektronenmikroskop aufgenommenen tomographischen Bild erkennbare sichtbare Grenze vorhanden ist.

3. Aufzeichnungsmaterial nach Anspruch 1 oder 2, wobei die Koerzitivkraft der ferromagnetischen Teilchen in der obersten magnetischen Schicht 700 - 1200 Oe und die der ferromagnetischen Teilchen in der dieser benachbart angeordneten magnetischen Schicht 400 - 700 Oe betragen.

4. Aufzeichnungsmaterial nach einem der Ansprüche 1 bis 3, wobei mindestens eine der Schichten ein Harzbindemittel mit einer $-SO_3M$-, $-OSO_3M$-, $-COOM$- oder

$$\begin{array}{c} OM^1 \\ | \\ -P{=}O \\ | \\ OM^2 \end{array}$$

-Gruppe, worin M für ein Wasserstoff-, Lithium- oder Natriumatom steht und $M^1$ oder $M^2$, die gleich oder verschieden sein können, ein Wasserstoff-, Lithium-, Natrium- oder Kaliumatom oder eine Alkylgruppe bedeuten, enthält.

5. Aufzeichnungsmaterial nach Anspruch 4, wobei die bindemittelhaltige Schicht die oberste magnetische Schicht darstellt.

6. Aufzeichnungsmaterial nach Anspruch 5, wobei das Bindemittel aus einem Vinylchloridharz oder einem Polyurethanharz besteht.

7. Aufzeichnungsmaterial nach Anspruch 6, wobei das Vinylchloridharz oder das Polyurethanharz die -$SO_3M$-Gruppe enthält.

8. Aufzeichnungsmaterial nach einem der Ansprüche 4 bis 7, wobei die oberste magnetische Schicht und die dieser benachbart angeordnete magnetische Schicht mindestens ein Bindemittel enthalten.

9. Aufzeichnungsmaterial nach Anspruch 8, wobei die oberste magnetische Schicht und die dieser benachbart angeordnete magnetische Schicht mindestens ein Bindemittel aus der Gruppe Polyvinylchloridharze und Polyurethanharze enthält.

10. Aufzeichnungsmaterial nach Anspruch 9, wobei mindestens eines der Bindemittel die -$SO_3M$-Gruppe enthält.

11. Aufzeichnungsmaterial nach einem der Ansprüche 1 bis 10, wobei die Dicke der obersten magnetischen Schicht bzw. der dieser benachbart angeordneten magnetischen Schicht 0,01 - 1,0 μm bzw. 1,5 - 3,5 μm beträgt.

12. Aufzeichnungsmaterial nach einem der Ansprüche 1 bis 11, wobei die oberste magnetische Schicht $\alpha$-$Al_2O_3$ einer durchschnittlichen Teilchengröße von 50 - 600 nm enthält.

13. Aufzeichnungsmaterial nach einem der Ansprüche 1 bis 12, wobei der nicht-magnetische Schichtträger eine Rußteilchen einer durchschnittlichen Teilchengröße von 70 - 500 nm in einer Menge von 8 - 50 Gew.-% des gesamten anorganischen Füllstoffs enthaltende Rückschicht aufweist.

14. Aufzeichnungsmaterial nach einem der Ansprüche 1 bis 13, wobei die von der obersten magnetischen Schicht verschiedenen Schichten kein $\alpha$-$Al_2O_3$ enthalten.

15. Aufzeichnungsmaterial nach einem der Ansprüche 1 bis 14, wobei die von der obersten magnetischen Schicht verschiedenen Schichten keinen Ruß enthalten.

## Revendications

1. Un support d'enregistrement magnétique comprenant un support de base non magnétique portant une pluralité de couches magnétiques obtenues par un procédé de revêtement par extrusion du type dit humide-sur-humide, dans lequel il n'existe sensiblement aucune zone de mélange entre la couche magnétique la plus externe et la couche magnétique qui y est contiguë, et dans lequel ladite couche magnétique la plus externe comprend du noir de carbone présentant une granulométrie moyenne de 70 nm à 500 nm, en une quantité de 0,1 à 5,0% en poids, sur la base du poids des particules ferromagnétiques dans ladite couche la plus externe.

**2.** Un support selon la revendication 1, dans lequel il existe, entre la couche magnétique la plus externe et la couche magnétique contiguë, une frontière visible susceptible d'être reconnue sur une image tomographique obtenue par un microscope électronique.

**3.** Un support selon la revendication 1 ou la revendication 2, dans lequel la force coercitive des particules ferromagnétiques de la couche magnétique la plus externe est de 700 à 1200 Oe et seules des particules ferromagnétiques de la couche magnétique contiguë sont de 400 à 700 Oe.

**4.** Un support selon l'une quelconque des revendications 1 à 3, dans lequel au moins une des couches comprend une résine liante portant un groupement $-SO_3M$, $-OSO_3M$, -COOM, ou un groupement

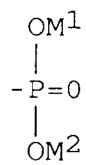

dans lequel:

| | |
|---|---|
| M | est un atome d'hydrogène, de lithium ou de sodium; |
| $M^1$ ou $M^2$ | est un atome d'hydrogène, de lithium, de sodium ou de potassium ou un groupement alkyle; et |
| $M^1$ et $M^2$ | sont identiques ou différents. |

**5.** Un support selon la revendication 4, dans lequel la couche qui contient le liant est la couche magnétique la plus externe.

**6.** Un support selon la revendication 5, dans lequel le liant comprend une résine de chlorure de vinyle ou une résine de polyuréthane.

**7.** Un support selon la revendication 6, dans lequel la résine de chlorure de vinyle ou la résine de polyuréthane comprend le groupement $-SO_3M$.

**8.** Un support selon l'une quelconque des revendications 4 à 7, dans lequel la couche magnétique la plus externe et la couche magnétique qui y est contiguë comprennent au moins un liant.

**9.** Un support selon la revendication 8, dans lequel la couche magnétique la plus externe et la couche magnétique qui y est contiguë comprend au moins un liant choisi dans le groupe des résines de polychlorure de vinyle et des résines de polyuréthane.

**10.** Un support selon la revendication 9, dans lequel au moins un desdits liants comprend le groupement $-SO_3M$.

**11.** Un support selon l'une quelconque des revendications 1 à 10, dans lequel l'épaisseur de chaque couche magnétique la plus externe et la couche magnétique qui lui est contiguë est de 0,01 à 1,0 µm et, respectivement, 1,5 à 3,5 µm.

**12.** Un support selon l'une quelconque des revendications 1 à 11, dans lequel la couche magnétique la plus externe comprend de l'$\alpha$-$Al_2O_3$ présentant une granulométrie moyenne de 50 à 600 nm.

**13.** Un support selon l'une quelconque des revendications 1 à 12, dans lequel le support de base non magnétique comprend un revêtement dorsal contenant des particules de noir de carbone d'une granulométrie moyenne de 70 à 500 nm, en une quantité de 8 à 50% en poids de la quantité totale de la charge minérale.

**14.** Un support selon l'une quelconque des revendications 1 à 13, dans lequel les couches, autres que la couche magnétique la plus externe, sont dépourvues de $\alpha$-$Al_2O_3$.

**15.** Support selon l'une quelconque des revendications 1 à 14, dans lequel les couches, outre la couche magnétique la plus externe, sont dépourvues de noir de carbone.

FIG. 1

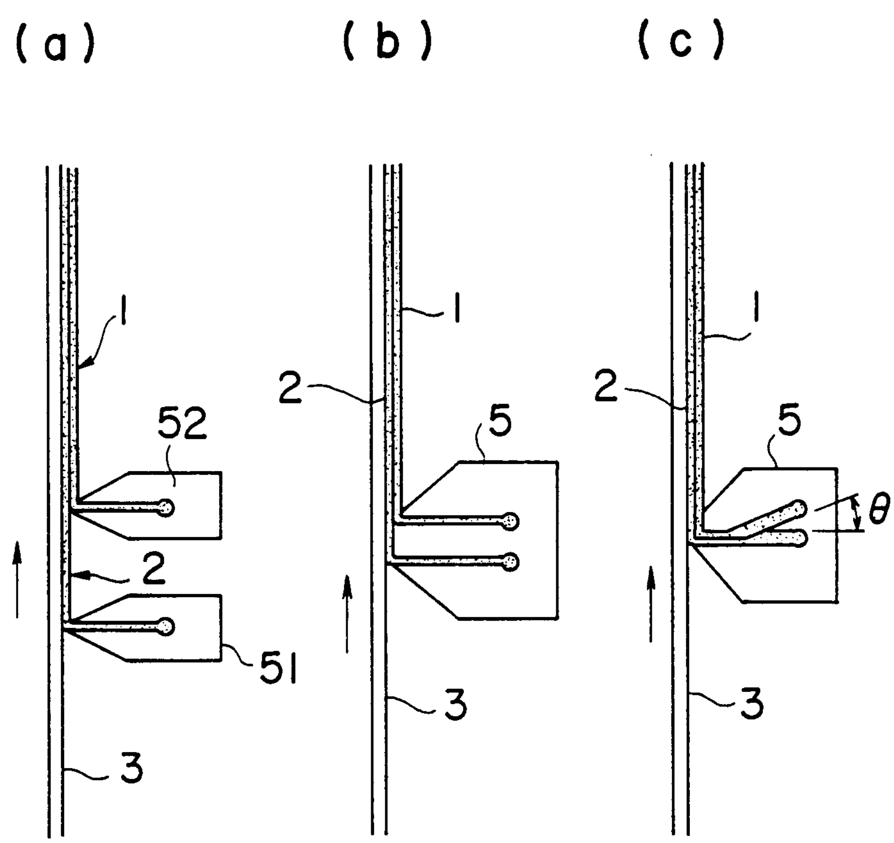

F I G. 2